# EUROPEAN PATENT APPLICATION

(11) **EP 3 111 750 A1**
(43) Date of publication of application: **04.01.2017**
(21) Application number: 16174946.0
(22) Date of filing: 17.06.2016
(51) Int. Cl.: A01G 3/02, A01D 46/247

(54) **SCISSORS FOR GRAPE HARVEST OR PICKING OF GRAPES AND SIMILAR**

(30) Priority: 02.07.2015 ES 201530778 U
(71) Applicant: Ibanez Olalla, Roberto, 01307 Villabuena de Alava (ES)
(72) Inventor: Ibanez Olalla, Roberto, 01307 Villabuena de Alava (ES)
(74) Representative: Ezcurra Zufia, Maria Antonia

(57) **Abstract**

Scissors for grape harvest or picking of grapes or other kind of similar fruits which is characterised by the special production characteristics that present the scissors object of the invention, that allow, in addition to cut the fruit by the peduncle or leaf stalk, to hold the fruit, so is not necessary to use the other hand to put the fruit in the basket.

## Description

### OBJECT OF THE INVENTION

The object of the present invention, as the title of the invention establishes, is a scissors for grape harvest or picking of grapes or other kind of similar fruits.

The present invention is characterised by the special production characteristics that present the scissors object of the invention, that allow, in addition to cut the fruit by the peduncle or leaf stalk, to hold the fruit, so is not necessary to use the other hand to put the fruit in the basket.

Therefore, the present invention circumscribes in the field of the tools used for grape harvest or picking of fruit farmer products.

### BACKGROUND TO THE INVENTION

Until now, excluding the automated grape harvest, the manual grape harvest is made with scissors or a knife adapted to cut the fruit, one of the hands, usually the right one carries the tool and makes the cut of the fruit, while the other hand holds the fruit and then put it in the basket.

The object of the present invention is to develop a tool as the one described, that improves the grape harvest process described above, without the necessity of using the two hands for picking each fruit, it is for that reason that the tool of the invention allows to cut the fruit, pick it and put it in the basket with the same hand. In addition, it allows the picking of several simultaneous bunches by hand.

### DESCRIPTION OF THE INVENTION

The object of the present invention is a scissors for grape harvest or picking of grapes or other kind of similar fruits that allows in addition to cut the bunch, hold it particularly after the cut, so the cutting and holding operations can be done by a single hand, so the other hand is not necessary to hold the fruit and then put it in the basket. In this way, is possible to handle scissors in each hand to make simultaneous bunches cuts and move both bunches held by the scissors without be touched until they are put in the basket.

To carry out said purposes, the scissors have, as all the scissors, two jointed blades, one in the front, and the other in the back, but it also has in its edge, an angular shape, with a first horizontal section and a second vertical section that lies downwards from the right end of the horizontal section, with the horizontal section of one of the clamps providing an edge, so an intermediate space is defined between the vertical sections of the clamps that are used to house and hold by the applied pressure by the scissors in its joint, the upper end of the bunch or fruit.

Said intermediate space defined between the clamps can be variable, but it is wider in its lower part or in the part close to the joint of the blades preferentially, and it is narrower in its upper part.

Additionally, one of the clamps can also have a moving lip with a moving blade on it, and the set moves against the force of a spring housed in the space between the clamp and the moving lip, and it recovers a balance position so the space between the clamps is free.

In this way, the grip of the peduncle is secured by the clamps before the cut. In an alternative way, we can use a spiral spring attached to one of the blades, with a key acting as a stop block.

In any of the ways explained above, using fixed or moving clamps, or using a spiral spring, is possible to arrange some handles that emerge perpendicularly to the blade plane over the free ends of the scissors drive, and a spring is arranged between them, one of the handles stays connected by a section directly over the joint of the blades of the scissors, while the other handle stays connected by means of a first section jointed in its opposite end to a tappet, and it, in turn, in its other end, to one of the blades, so by approaching both handles, the closure of the blade is achieved.

In an alternative way to this driving scissors way, and with the possibility of being used in any of the three ways that the clamps can present, is possible to arrange, crosswise to the scissors plane, some handles with a spring or similar over the driving section of the blades.

Unless the opposite is indicated, all the technical and scientific elements used in the present report have the meaning that is usually understood by any expert in the technique in the field of this invention. In the practise of the present invention, similar materials or procedures to those described in the report can be used.

Throughout the description and the claims, the word "comprise" and its variations do not expect to exclude other technical characteristics, additives, components or stages. For the experts on the subject, other objects, advantages and characteristics of the invention will be deduced from the description and from the practise of the invention.

### DESCRIPTION OF THE DRAWINGS

To complement the description that is being done, and with the object of helping to a better comprehension of the characteristics of the invention, according to a preferred embodiment of the invention, a set of drawings is attached as a component of the description. In the drawings, with an illustrative and non limitative character, is shown the following:
Figure 1 shows a grape harvest scissor with a single edge, with the sectional view from the A-B plane.
Figure 2 shows the scissor with its mouth in a closed position, with the sectional view from the A-B plane.
Figure 3 shows the process of the cut of a bunch by the scissors, it also shows the obtaining section by cutting in a A-B plane, according to different cutting positions.
Figure 4 shows an alternative embodiment providing a peduncle clamp means before its cut.
Figure 5 shows an alternative embodiment with the moving lip being a part of a spiral spring.
Figure 6 shows a complementary embodiment of the above, with the scissors providing handles that are arranged in a perpendicular plane to the cutting plane of the blades.
Figure 7 shows an alternative embodiment with the spring being attached between two short handles.

### PREFERRED EMBODIMENT OF THE INVENTION

In view of the figures, a preferred embodiment of the proposed invention is described below.

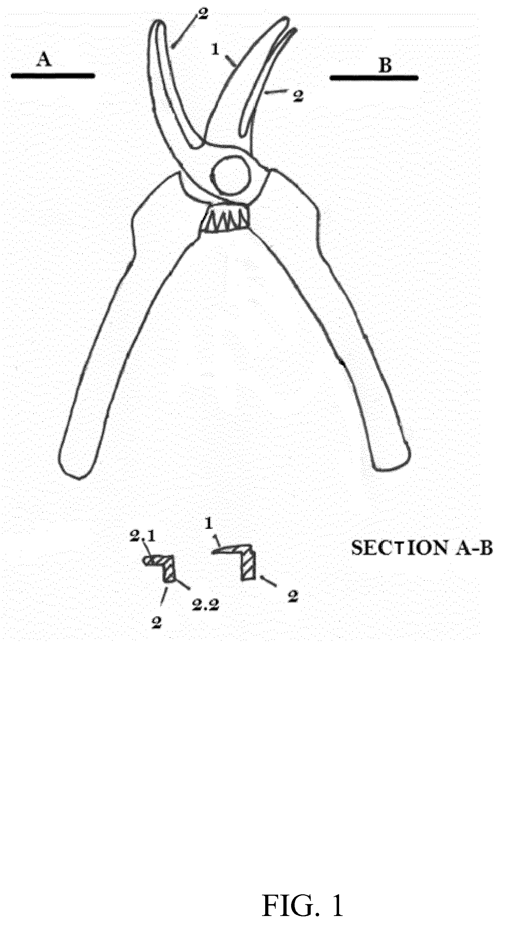

Figure 1 shows a scissors, like the one object of the invention, with two blades, one in the front and the other in the back, which in its edge presents a shape in its cross section that is an angular shape and define two clamps (2).

The clamps (2), as indicated above, have an angular shape, with a first horizontal section (2.1) and a second vertical section (2.2) laying downwards from the right end of the first horizontal section (2.1), as is shown in the sectional view. Both clamps (2) have the same facing, and in one of them, the horizontal section provides an edge (1).

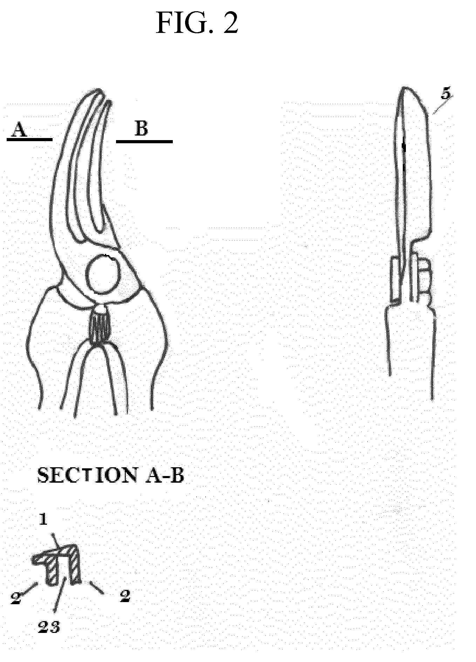

Figure 2 shows the scissors completely closed, and the clamps (2) define an intermediate space (23) between the vertical sections of them. Said intermediate space (23) does not have a continuous width along the edge, it is wider in the lower part than in the upper part, so the thickest peduncles are cut with the lower part, while the thinnest peduncles are cut with the upper part.

In the side view of the closed scissors, the height (5) of the clamps or lips can be seen.

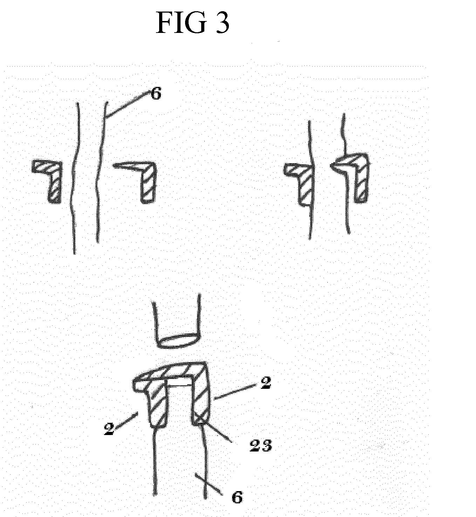

Figure 3 shows in the three representations, the process of the cut of a peduncle (6), beginning with the housing between the lips or clamps (2) of a scissors, of the peduncle (6), the progressive closure and beginning of the cut with the edge (1) of one of the clamps and the final cut of the peduncle, staying the upper end of it housed in the intermediate space (23) defined between the clamps (2). In this way, with a single hand, the operation of cutting and holding of a bunch or similar can be done, being the release of the bunch done in an easy way, only with the opening of the scissors.

Depending on the thickness of the peduncle and on the part of the blade of the scissors where the cut is done, the cut of the peduncle could happen before the catching or pressing of the upper end of the peduncle, but it does not mean that the bunch falls on the floor, because the own speed of the closure of the scissors in the cut allows the peduncle to be caught by its upper end before it falls by gravity.

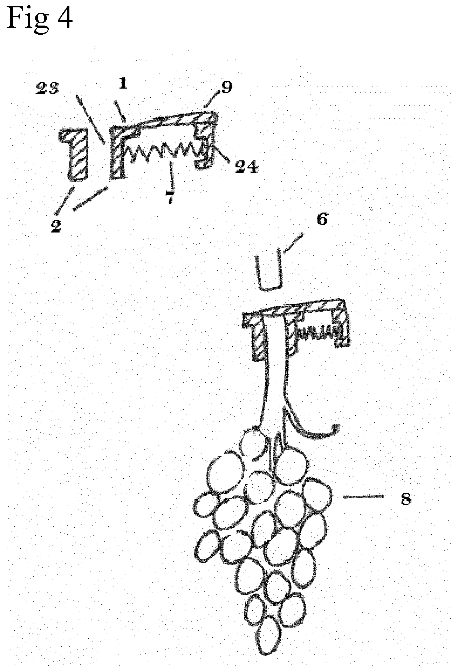

Figure 4 shows a complementary embodiment to the shown above, in which there is in addition a moving lip (24) arranged on one of the clamps, with a moving blade (9) arranged on the moving lip, and the set moves against the force of a spring (7) housed in the space between the clamp (2) where is arranged and the moving lip (24), and it recovers a balance position so the space (23) between the clamps (2) is free.

When the cutting process happens, thanks to this configuration shown in this figure 4, the catching of the peduncle (6) is carried out between the clamps (2), and then the cutting is also carried out by the movement of the moving blade (9) against the force of a spring (7), producing a progressive smashing and grip of the upper end of the peduncle, making sure a more effective grip of the bunch (8).

For the release of the bunch (8), it is enough to open the scissors.

This embodiment is especially interesting when we want the peduncle not to be smashed, but be pressed enough to avoid the fallen of the bunch.

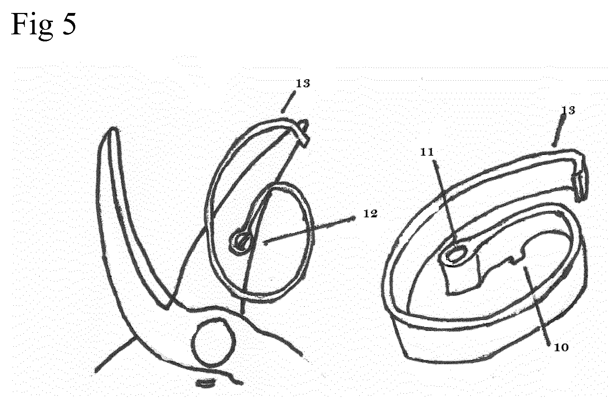

Figure 5 shows a spiral spring (13) that is used as an elastic element to avoid the smashing of the peduncle and it has a key (10) to grip itself to the blades of the scissors and it also has a hole (11) to screw it to the hole of the scissors (12). The height of this spiral spring (13) is similar to the height of the clamps (2).

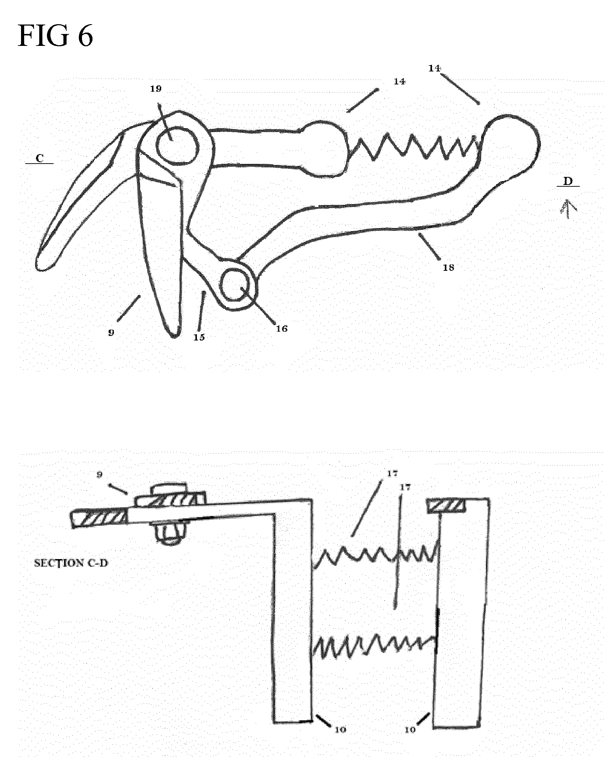

Figure 6 shows a more evolved development of what shown above, providing some handles (14) that are in a perpendicular plane to the plane of the edge (9), to be less tired and more comfortable and make possible to support higher weights. These handles (14) are separated by some springs (17), being one of the handles connected to one of the blades by means of a set formed a first section (18) that is connected in one end to one of the handles, and in the opposite end is connected by a joint (16) to a tappet (15) that is connected in its opposite end to one of the blades; the other handle is connected to the scissors in its joint (19), so by making the approach of the handles (14), the movement of the blade (9) is produced.

The embodiment represented in figure 6 is suitable for the right hand because the blade is on the left of the hand that grips the handles, in case of the tool were for the left hand, the blade and the rest of the elements would be on the right of the hand that grips the handles.

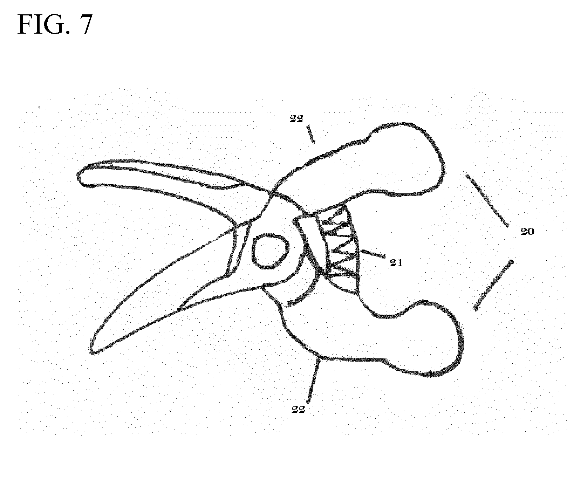

Finally, figure 7 shows other model of scissors, providing a short handles (22) or driving sections of the scissors, and from their ends, a long handles (20) lay perpendicularly downwards to the scissors plane to grip them with the hands, being arranged a spring (21) between the short handles (22).

Once the nature of the present invention has been described, as well as the way to put it into practice, is a fact that, inside its essentiality, it will can put into practice in other embodiments with details in difference from the one indicated as the example, and the protection that is demanded, will also reach them, if their fundamental principle does not change.

## Claims

1. Scissors for grape harvest or picking of grapes or similar, having the scissors two blades, one in the front and the other in the back, **characterised in that** its edge presents a shape in its cross section that is an angular shape and define two clamps (2), where each clamp (2), presents a first horizontal section (2.1) and a second vertical section (2.2) laying downwards from the right end of the first horizontal section (2.1), both clamps (2) have the same facing, and in one of them, the horizontal section provides an edge (1) and in the closed position, an intermediate space (23) is defined between the vertical sections (2.2) of the clamps.

2. Scissors for grape harvest or picking of grapes or similar, according to claim 1, **characterised in that** the intermediate space (23) between the vertical sections of the clamps does not have a continuous width along the edge, being wider in the lower part than in the upper part.

3. Scissors for grape harvest or picking of grapes or similar, according to claim 1 or 2, **characterised in that** there is in addition a moving lip (24) arranged on one of the clamps, with a moving blade (9) arranged on the moving lip, and the set moves against the force of a spring (7) housed in the space between the clamp (2) where is arranged and the moving lip (24), and it recovers a balance position so the space (23) between the clamps (2) is free.

4. Scissors for grape harvest or picking of grapes or similar, according to claim 1 or 2, **characterised in that** there is an elastic element between the scissors blades to avoid the smashing of the peduncle and it consists of a spiral spring (13), that counts on a key (10) to grip itself to the blades of the scissors and it also has a hole (11) to screw it to the hole of the scissors (12). The height of this spiral spring (13) is similar to the height of the clamps (2).

5. Scissors for grape harvest or picking of grapes or similar, according to any of the claims 1 to 4, **characterised in that** the scissors count on some handles (14) that are in a perpendicular plane to the plane of the edge (9), to be less tired and more comfortable and make possible to support higher weights. These handles (14) are separated by some springs (17), being one of the handles connected to one of the blades by means of a set formed a first section (18) that is connected in one end to one of the handles, and in the opposite end is connected by a joint (16) to a tappet (15) that is connected in its opposite end to one of the blades; the other handle is connected to the scissors in its joint (19), so by making the approach of the handles (14), the movement of the blade (9) is produced.

6. Scissors for grape harvest or picking of grapes or similar, according to any of the claims 1 to 4, **characterised in that** the scissors present a short handles (22) or driving sections of the scissors, and from their ends, a long handles (20) lay perpendicularly downwards to the scissors plane to grip them with the hands, being arranged a spring (21) between the short handles (22).
